# FASCICULE DE BREVET EUROPEEN

(11) **EP 0 859 928 B1**
(45) Date de publication et mention de la délivrance du brevet: **16.06.1999**
(21) Numéro de dépôt: 96934952.1
(22) Date de dépôt: 22.10.1996
(51) Int. Cl.: F16L 39/00, F16L 37/18

(54) **DISPOSITIF DE CONNEXION HYDRAULIQUE**
VORRICHTUNG FÜR EINE HYDRAULISCHE VERBINDUNG
HYDRAULIC COUPLING DEVICE

(30) Priorité: 08.11.1995 FR 9513440
(43) Date de publication de la demande: 26.08.1998
(73) Titulaire: SOCIETE D'ETUDES ET D'INNOVATION DANS LE MATERIEL AGRICOLE (SEIMA), F-35690 Acigne (FR)
(72) Inventeur: MAILLEUX, Loic, F-35000 Rennes (FR)
(74) Mandataire: Le Faou, Daniel
(86) Numéro de dépôt international: FR9601649
(87) Numéro de publication internationale: WO9717564

(56) Documents cités:
- DE-A- 1 917 029
- DE-B- 1 256 006
- US-A- 4 105 046

## Description

La présente invention concerne un dispositif de connexion hydraulique entre au moins une paire d'organes de connexion complémentaires, l'un mâle et l'autre femelle, aptes à être emboîtés axialement l'un dans l'autre.

Dans de nombreux domaines de l'industrie il est nécessaire de connecter de manière étanche une machine, ou autre équipement, à une ou plusieurs sources distributrices de liquide hydraulique, ceci au moyen d'une ou de plusieurs connexions distinctes.

C'est le cas en particulier de la liaison hydraulique d'un tracteur agricole avec un dispositif chargeur à commande hydraulique destiné à être monté, de manière amovible, sur le tracteur.

Différents dispositifs ont été proposés, qui sont généralement relativement complexes, encombrants et d'un prix de revient élevé.

L'objectif de l'invention est de proposer un dispositif de connexion hydraulique extrêmement compact, tout en étant robuste, simple à utiliser et peu coûteux.

Le dispositif proposé comporte au moins une paire d'organes de connexion complémentaires, et de préférence plus d'une paire d'organes de connexion complémentaires, l'un mâle et l'autre femelle aptes à être emboîtés axialement l'un dans l'autre.

Ce dispositif est remarquable par le fait qu'il comprend :
- un boîtier de forme parallélépipèdique rectangle ouvert vers le haut, et dont le fond porte l'un desdits organes ;
- une platine portant l'autre organe et pourvu d'une paire de plaquettes latérales situées de chaque côté de cet organe et s'étendant vers le bas, perpendiculairement au plan de la platine, chaque plaquette présentant un évidement à bord profilé dirigé vers l'avant;
- un arbre de commande monté de manière pivotante (sur son propre axe) à l'intérieur du boîtier et présentant deux portions en forme de cames, adaptées chacune pour coopérer avec le bord profilé d'évidement de la plaquette associée afin de provoquer l'enfoncement et le verrouillage des plaquettes à l'intérieur du boîtier lorsqu'on fait pivoter l'arbre, et assurer ainsi l'emboîtement mutuel des organes de connexion.

Par ailleurs, selon un certain nombre de caractéristiques additionnelles non limitatives de l'invention :
- le bord arrière desdites plaquettes est rectiligne, le dimensionnement et le positionnement des plaquettes étant tels que ces dernières sont guidées au niveau de leur face externe par les parois latérales du boîtier, et au niveau de leur bord arrière par la paroi arrière du boîtier ;
- la platine est dimensionnée de telle manière qu'elle fait office de couvercle pour le boîtier lorsque le dispositif est à l'état connecté ;
- les portions en forme de cames comprennent un méplat à bord d'entrée arqué convexe ;
- le bord profilé de l'évidement présente deux portions obliques divergeant vers l'avant;
- l'angle que forment entre elles les portions obliques est de l'ordre de 90° ;
- la portion oblique inférieure est située à une distance de la platine qui est plus grande que la longueur de l'organe connecteur s'étendant sous la platine ;
- il comporte des butées et/ou des moyens d'indexation de l'arbre dans ses positions extrêmes de pivotement ;
- l'organe (ou les organes) de connexion porté(s) par la platine est (sont) encadré(s) par lesdites plaquettes latérales et, de ce fait, se trouve(nt) à l'abri des chocs ;
- le boîtier est pourvu d'un couvercle sollicité par un ressort dans le sens de sa fermeture, et muni d'un rebord en forme de visière qui facilite son ouverture.

D'autres caractéristiques et avantages de l'invention apparaîtront de la description et des dessins annexés qui en représentent, à simple titre d'exemple, un mode de réalisation possible.

Sur ces dessins :
- la figure 1 est une vue générale en perspective du dispositif ;
- la figure 2 est une vue de côté du dispositif de la figure 1, coupée par un plan vertical transversal ;
- les figures 3 à 5 sont des vues de côté schématiques qui illustrent la manière dont s'opère la connexion.

Le dispositif représenté sur les figures comprend deux organes de connexion distincts composés chacun d'une paire d'organes de connexion complémentaires, l'un mâle et l'autre femelle, aptes à être emboîtés axialement l'un dans l'autre, de manière étanche.

Ces éléments sont de type connu en soi.

Ils sont naturellement obturés (étanches). Par contre lorsque l'organe mâle est enfoncé dans l'organe femelle, la connexion est réalisée et le liquide hydraulique peut passer de l'un à l'autre.

On a désigné par la référence 3 les organes mâles, et par la référence 4 les organes femelles.

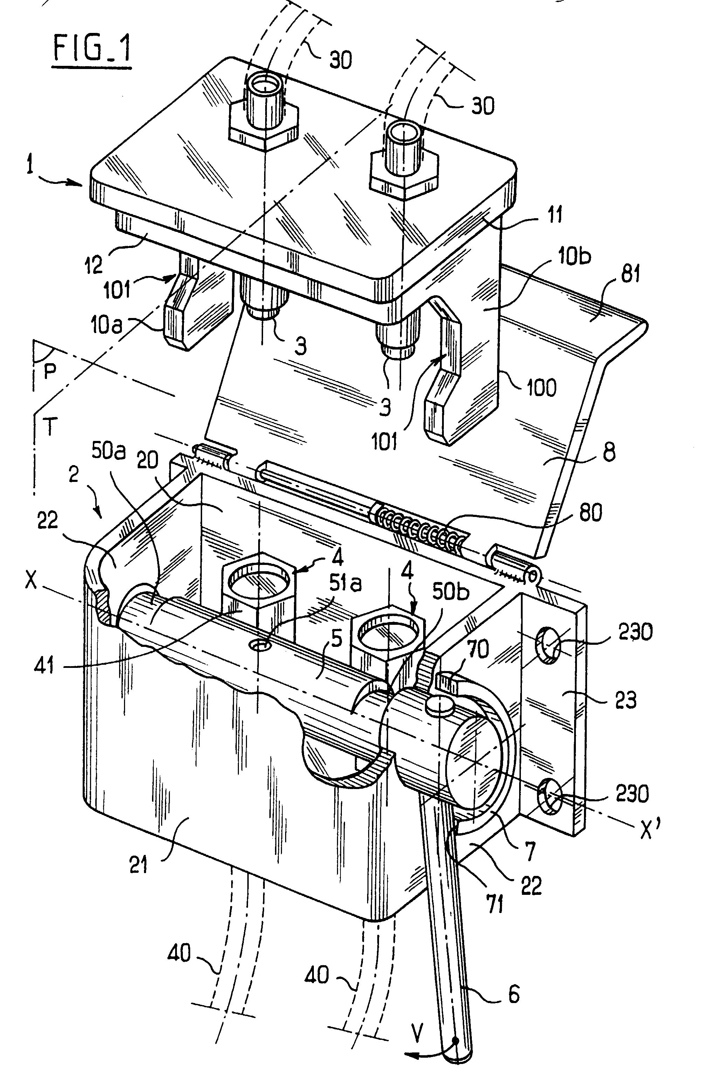

Le dispositif a une forme générale symétrique par rapport à un plan vertical et transversal médian, référencé **T** à la figure 1.

Les organes 3 sont portés par un support 1 comprenant une platine 11 de forme approximativement rectangulaire.

Les organes 3 traversent la platine 11 perpendiculairement, leur axe étant par conséquent dirigé verticalement lorsque la platine 11 est horizontale. Les deux organes 3 sont situés côte-à-côte, leur axe se trouvant dans le même plan vertical longitudinal **P** (orthogonal à **T**).

Au-dessus de la platine 11, les organes 3 se raccordent chacun à un conduit flexible 30 dans lequel peut circuler un liquide hydraulique.

La platine 11 est pourvue d'une paire de plaquettes latérales 10 identiques situées de chaque côté des organes 3 et s'étendant vers le bas, perpendiculairement au plan de la platine 11, parallèlement au plan **T**.

L'une des plaquettes est désignée 10a et l'autre 10b. Chacune présente un évidement 101 à bord profilé dirigé vers l'avant.

Le bord arrière 100 des plaquettes est rectiligne, perpendiculaire au plan de la platine.

Les organes femelles 4 sont montés à l'intérieur d'un boîtier-support 2. Celui-ci a une forme parallélépipédique rectangle ouvert vers le haut, dont les parois latérales sont référencées 22, la paroi arrière 20 et la paroi avant 21.

La paroi arrière 20 se prolonge latéralement par des pattes 23 traversées par des trous 230 destinés à recevoir des organes de fixation appropriés, par exemple des boulons. Ainsi le boîtier 2 peut par exemple être fixé sur un tracteur, tandis que le support 1 est porté par un chargeur à commande hydraulique.

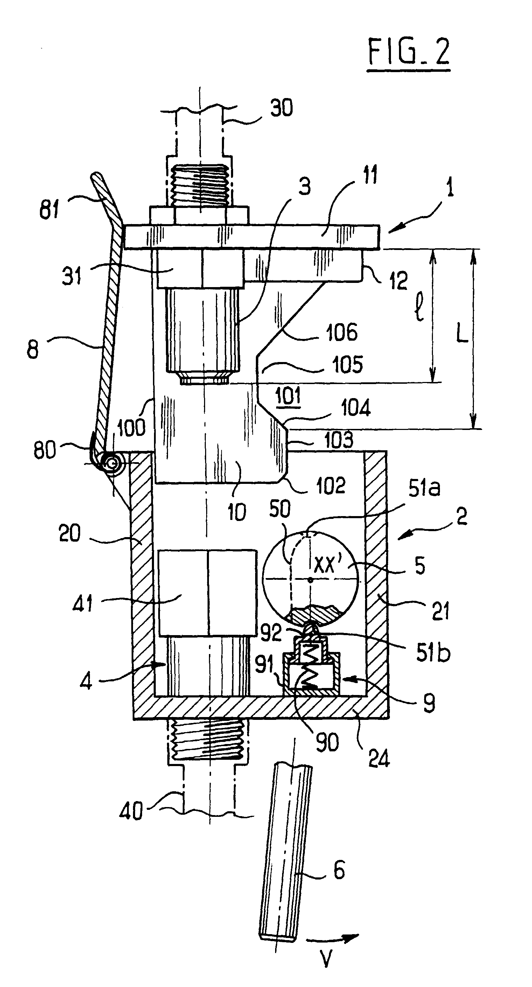

Les deux organes femelles 4 traversent le fond du boîtier, fond désigné 24 sur la figure 2 ; leur axe est perpendiculaire au plan du fond 24. Les éléments femelles 4 sont situés côte-à-côte, dans le même plan longitudinal du boîtier, à une distance mutuelle identique de celle séparant les éléments mâles.

Au-delà du fond du boîtier, les éléments femelles se raccordent à des conduits flexibles 40 représentés en traits interrompus, similaires au conduit 30 déjà mentionné.

Le dispositif comporte un arbre 5 d'axe **XX'** longitudinal, parallèle au plan **P** et au fond 24, guidé en rotation par ses portions d'extrémité dans les parois latérales 22.

Cet arbre 5 est disposé juste devant les organes 4.

Des moyens appropriés assurent son immobilisation axiale.

Les organes 4 sont montés dans le fond de boîtier 24 avec un léger jeu, destiné à autoriser leur alignement axial avec les organes mâles 3, lors de la connexion.

Chaque organe 4 présente une partie supérieure hexagonale 41, dont l'une des faces verticales (face avant) est positionnée parallèlement à **XX'**, tout près de la génératrice arrière de l'arbre 5, et est susceptible de prendre appui contre cette dernière si on tend à faire tourner l'organe 4 (notamment lors de la mise en place ou de l'enlèvement du conduit 40), afin de l'immobiliser en rotation.

L'arbre 5 ressort à l'une de ses extrémités sur l'un des côtés du boîtier, sa partie extérieure étant munie d'un levier de manoeuvre 6.

A l'intérieur du boîtier, l'arbre 5 présente deux portions latérales échancrées 50a, 50b qui constituent des surfaces profilées formant cames, dont le rôle sera expliqué plus loin. Leur écartement mutuel correspond à celui des plaquettes 10a, 10b.

L'arbre 5 peut pivoter sur un angle de 180° entre une position déverrouillée, illustrée à la figure 1 (levier 6 dirigé vers le bas) et une position dite de verrouillage (levier 6 dirigé vers le haut).

La face externe de la paroi de boîtier 22 située du côté du levier 6 porte une nervure en arc de cercle 7 qui entoure à ce niveau la portion d'extrémité de l'arbre 5.

Ses faces "en bout" supérieure 70 et inférieure 71 servent de butées au levier 6 respectivement dans la position de verrouillage et de déverrouillage.

Le dispositif comporte également des moyens d'indexation de l'arbre 5 dans chacune de ses deux positions extrêmes. Ces moyens 9 comprennent une douille verticale 91 fixée au fond 24 du boîtier, à l'aplomb de l'axe **XX'**, dans la région centrale de l'arbre 5.

Dans la douille 91 peut coulisser un petit piston sollicité vers le haut par un ressort 90 et portant une saillie hémisphérique 92 pouvant s'engager dans une petite cuvette 51a, ou 51b formée dans l'arbre 5. Les deux cuvettes sont diamétralement opposées.

Les moyens d'indexation 9 ont pour fonction d'assurer le blocage de l'arbre, soit en position de déverrouillage, ce qui permet la mise en place du dispositif 1 dans le boîtier sans que l'opérateur ait à faire usage d'une main pour maintenir l'arbre en position correcte, soit en position de verrouillage, ce qui empêche les déverrouillages intempestifs risquant d'être provoqués par les vibrations.

Le boîtier 2 est pourvu d'un couvercle articulé 8 ; un ressort 80 tend constamment à le refermer automatiquement.

Ainsi, lorsque le dispositif 1 est retiré, le boîtier est fermé, et les organes connecteurs femelles 4 se trouvent à l'abri de la poussière et autres salissures.

Le bord avant du couvercle 8 forme un rebord 81 incliné vers le haut, en forme de visière, débordant vers l'avant du boîtier lorsque le couvercle est fermé. Son rôle sera expliqué plus loin.

Les plaquettes 10a et 10b sont dimensionnées et positionnées de telle manière que lorsqu'on les engage verticalement de haut en bas dans le boîtier ouvert 2, les faces latérales externes des plaquettes viennent glisser contre les faces internes des parois latérales 22 du boîtier, tandis que leur bord arrière 100 vient glisser contre la face interne de la paroi arrière 20 du même boîtier.

Chaque plaquette 10a, 10b se trouve en vis-à-vis d'une échancrure profilée 50a, 50b lorsque le support 1 est introduit dans le boîtier 2.

Le bord avant des plaquettes 10 comprend, du bas vers le haut, plusieurs portions rectilignes, à savoir un chanfrein d'entrée 102, une partie verticale 103, une partie oblique dirigée vers l'arrière 104, une partie verticale 105 et une partie oblique dirigée vers l'avant 106.

Les portions 104 et 106 forment un angle de l'ordre de 45° par rapport à la verticale.

Elles délimitent avec le bord vertical 105 un évidement formant un "V" à fond tronqué, d'angle égal à 90°, et dont l'ouverture est dirigée vers l'avant.

C' est dans cet évidement 101 que va s'opérer le verrouillage au moyen de la came associée 50 de l'arbre 5.

Comme on le voit sur les figures 2 à 5, les portions profilées formant came 50 comprennent un méplat 500 se raccordant à une portion d'entrée arquée convexe 501, qui rejoint de manière progressive et douce le reste, semi-cylindrique, de la paroi de l'arbre 5.

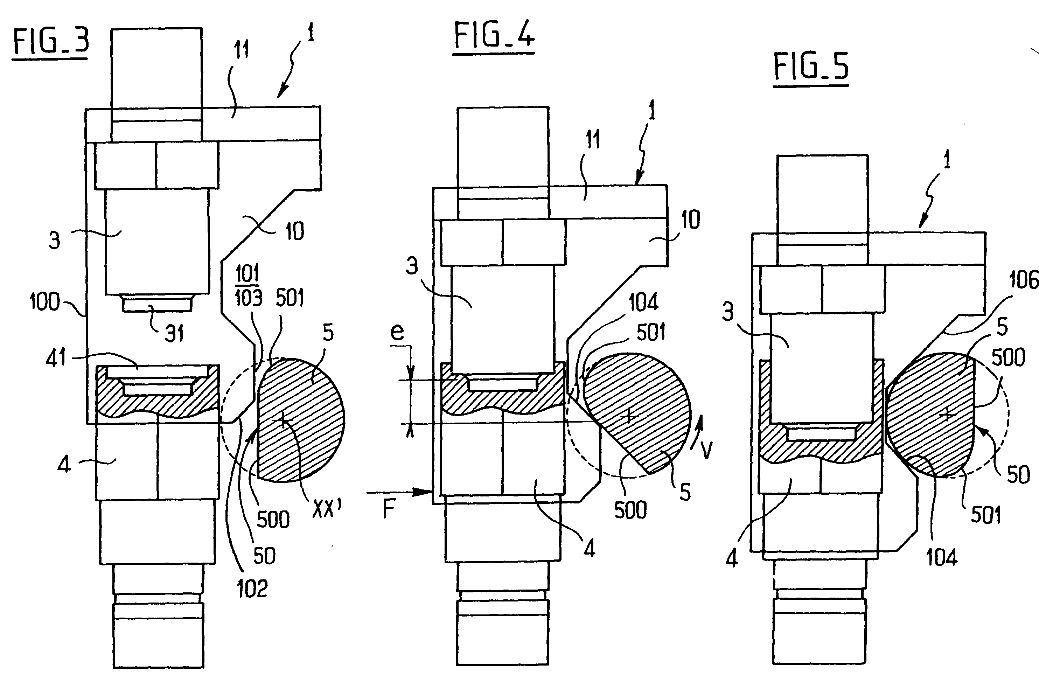

Dans la position initiale déconnectée, illustrée aux figures 2 et 3, le méplat 500 est disposé verticalement, la partie arquée 501 étant tournée vers le haut.

La saillie de piston 92 (non représentée sur la figure 3) est engagée dans la cuvette 51b, de sorte que l'arbre 5 est maintenu dans la position voulue.

A cet égard, il convient de remarquer que l'opérateur a généralement les deux mains occupées, l'une pour saisir les conduits flexibles 30 et l'autre pour saisir et manipuler la partie 1. Il ne lui est donc pas possible de manoeuvrer le levier 6 pour agir sur l'arbre de commande 5.

Il ne lui est pas non plus possible d'ouvrir le couvercle 8 à la main. Cette ouverture peut néanmoins être réalisée simplement, grâce à la présence du rebord 81 en forme de visière. En effet, au début de l'opération, l'opérateur place le dispositif 1 devant le boîtier 2, de telle manière que le chant arrière de la platine 11 vienne s'appliquer contre ce rebord. Par un mouvement ascendant et dirigé vers l'arrière du dispositif, il peut ainsi faire pivoter le couvercle dans le sens de l'ouverture.

Il lui est alors possible - sans discontinuité de mouvement - de mettre en place du haut vers le bas la partie 1 dans la partie 2, l'arbre 5 et son méplat 500 étant positionnés et dimensionnés de telle manière que la partie 103 des plaquettes 10 puisse passer librement derrière le méplat, à faible distance de celui-ci (voir Fig. 3).

Cet engagement se fait jusqu'à ce que les extrémités 31 des organes mâles viennent prendre appui dans les ouvertures réceptrices 41 des organes femelles 4.

A l'aide du levier de manoeuvre 6, il fait ensuite tourner l'arbre 5 sur lui-même, autour de son axe **X X '**, dans le sens symbolisé par la flèche **V** à la figure 4.

Chaque portion de came 501 agit alors contre le plan oblique associé 104 pour effectuer une traction vers le bas sur les plaquettes 10 ; on obtient ainsi l'enfoncement souhaité de l'organe mâle à l'intérieur de l'organe femelle.

Les plaquettes 10 étant guidées par les faces latérales et par la paroi arrière du boîtier 2, les organes 3 descendent suivant un mouvement purement rectiligne, coaxialement aux organes 4, sans risque de coincement.

A la fin de l'opération, comme illustré à la figure 5, c'est la partie cylindrique de l'arbre 5 qui se trouve à l'intérieur de l'évidement 101, assurant ainsi le verrouillage de l'accouplement.

Pour désaccoupler l'ensemble, il suffit de faire tourner l'arbre 5 en sens inverse du précédent, sur un angle de 180°.

On remarquera que les organes mâles 3 s'étendent axialement sous la platine 11 sur une longueur sensiblement inférieure à celle des plaquettes 10a, 10b. De plus, ils sont encadrés par ces dernières. Ils se trouvent par conséquent à l'abri des coups, chocs et autres agressions physiques, même si la partie 1 tombe inopinément à terre, comme cela arrive assez fréquemment en pratique. Cette protection est intéressante car les organes connecteurs sont relativement fragiles et sensibles aux chocs.

A la figure 2, on a désigné par la référence **L** la distance de la zone inférieure de la portion 104 par rapport à la platine 11; on a désigné par **l** la longueur de l'organe 3 qui s'étend sous la platine.

Selon une caractéristique importante de l'invention, la dimension **L** est supérieure à **1**.

L' intérêt de cet agencement se comprend à la simple observation de la figure 4.

Lors de l'enfoncement des parties mâles dans les parties femelles, la zone de traction des cames sur les portions 104 est située plus bas que la zone d'appui mutuel des organes 3 et 4, le décalage étant désigné **e** à la figure 4.

En raison de l'inclinaison à 45° par rapport à la verticale de cette portion 104, la force qui s'applique sur cette portion tend à faire basculer les plaquettes 10 vers l'arrière.

Cependant, du fait que les bords arrières 100 des plaquettes sont en contact avec la paroi arrière 20 du boîtier, il se développe à ce niveau une force de réaction **F** qui s'oppose à ce basculement.

On obtient donc un enfoncement régulier et correct, sans arc-boutement de la partie 1 dans la partie 2. La force à déployer pour réaliser l'accouplement est relativement faible, et l'usure est réduite.

En position connectée, la platine 11 joue le rôle d'un couvercle pour le boîtier, l'ensemble des organes se trouvant parfaitement à l'abri du milieu extérieur.

De préférence, il est prévu sous la platine 11, dans sa zone antérieure, une surépaisseur 12 en forme de plateau pouvant s'emboîter avec faible jeu dans le bord avant du boîtier lorsque l'ensemble est verrouillé, de manière à améliorer encore cette protection.

Le chant arrière du plateau 12 peut également s'appliquer contre une face (face avant) de la partie hexagonale 31 de chacun des organes mâles 3 afin d'assurer leur immobilisation en rotation.

Bien que, dans le mode de réalisation qui vient d'être décrit, le dispositif comprenne deux connecteurs, il va de soi que l'invention s'applique également à des dispositifs ne comprenant qu'un seul connecteur ou à des dispositifs en comprenant plus de deux.

Par ailleurs, les organes mâles pourraient être solidaires du boîtier, et les organes femelles de la platine.

## Revendications

1. Dispositif de connexion hydraulique entre au moins une paire d'organes de connexion complémentaires, l'un (3) mâle et l'autre (4) femelle, aptes à être emboîtés axialement l'un dans l'autre, comprenant
- un boîtier (2) de forme parallélépipédique rectangle ouvert vers le haut, et dont le fond (24) porte l'un (4) desdits organes ;
- une platine (11) portant l'autre organe (3) et pourvu d'une paire de plaquettes latérales (10) situées de chaque côté de cet organe (3) et s'étendant vers le bas, perpendiculairement au plan de la platine, chaque plaquette (10) présentant un évidement (101) à bord profilé (104-105-106) dirigé vers l'avant ;
- un arbre de commande (5) monté de manière pivotante sur son axe (XX') à l'intérieur du boîtier (2) et présentant deux portions (50) en forme de cames, adaptées chacune pour coopérer avec un bord profilé (104-105-106) de la plaquette associée (10) afin de provoquer l'enfoncement et le verrouillage des plaquettes (10) à l'intérieur du boîtier (2) lorsqu'on fait pivoter l'arbre (5) et assurer ainsi l'emboîtement des organes de connexion (3, 4).

2. Dispositif selon la revendication 1, caractérisé par le fait que le bord arrière (100) desdites plaquettes (10) est rectiligne, le dimensionnement et le positionnement des plaquettes (10) étant tels que ces dernières sont guidées au niveau de leur face externe par les parois latérales (22) du boîtier (2), et au niveau de leur bord arrière (100) par la paroi arrière (20) du boîtier.

3. Dispositif selon la revendication 2, caractérisé par le fait que la platine (11) est dimensionnée de telle manière qu'elle fait office de couvercle pour le boîtier (2) lorsque le dispositif est à l'état connecté.

4. Dispositif selon l'une des revendications 1 à 3, caractérisé par le fait que les portions (50) en forme de cames comprennent un méplat (500) à bord d'entrée arqué convexe (501).

5. Dispositif selon l'une des revendications 1 à 5, caractérisé par le fait que le bord profilé de l'évidement (101) présente deux portions obliques (104, 106) divergeant vers l'avant.

6. Dispositif selon la revendication 5, caractérisé par le fait que l'angle que forment entre elles les portions obliques (104, 106) est de l'ordre de 90°.

7. Dispositif selon la revendication 6, caractérisé par le fait que la portion oblique inférieure (104) est située à une distance (L) de la platine (11) qui est plus grande que la longueur (1) de l'organe connecteur (3) s'étendant sous la platine.

8. Dispositif selon l'une des revendications 1 à 7, caractérisé par le fait qu'il comporte des butées (70) et/ou des moyens d'indexation (9, 51a, 51b) de l'arbre dans ses positions extrêmes de pivotement.

9. Dispositif selon l'une des revendications 1 à 8, caractérisé par le fait que l'organe - ou les organes - de connexion (3) porté(s) par la platine est (sont) encadré(s) par lesdites plaquettes latérales (10) et, de ce fait, se trouve(nt) à l'abri des chocs.

10. Dispositif selon l'une des revendications 1 à 9, caractérisé par le fait que le boîtier (2) est pourvu d'un couvercle (8) sollicité par un ressort (80) dans le sens de sa fermeture, et muni d'un rebord (81) en forme de visière qui facilite son ouverture.

## Patentansprüche

1. Vorrichtung zur hydraulischen Verbindung zwischen wenigstens einem Paar komplementärer Verbindungsorgane, wovon das eine (3) männlich und das andere (4) weiblich ist, wobei sie dafür eingerichtet sind, axial ineinander gesteckt zu werden, mit
- einem Gehäuse (2) mit einer nach oben hin offenen rechteckigen Quaderform, dessen Boden (24) das eine (4) der Organe trägt;
- einer Tragplatte (11), welche das andere Organ (3) trägt und mit einem Paar seitlicher Plättchen (10) ausgestattet ist, welche auf jeder Seite dieses Organs (3) angeordnet sind und sich nach unten, senkrecht zu der Ebene der Tragplatte erstrecken, wobei jedes Plättchen (10) eine Aussparung (101) mit nach vorne gerichteter Profilkante (104-105-106) aufweist;
- einer Steuerwelle (5), welche schwenkbar auf ihrer Achse (XX') innerhalb des Gehäuses (2) angebracht ist und zwei Bereiche (50) in Form von Nocken aufweist, welche jeweils dafür eingerichtet sind, mit einer Profilkante (104-105-106) des zugeordneten Plättchens (10) zusammenwirken, um das Einschieben und die Verriegelung der Plättchen (10) in dem Inneren des Gehäuses (2) zu bewirken, wenn die Welle (5) geschwenkt wird, und somit das Ineinanderstecken der Verbindungsorgane (3, 4) zu gewährleisten.

2. Vorrichtung gemäß Anspruch 1, dadurch gekennzeichnet, daß die hintere Kante (100) der Plättchen (10) geradlinig ist, wobei die Bemessung und die Positionierung der Plättchen (10) derart sind, daß diese letzteren auf der Ebene ihrer Außenseite von den Seitenwänden (22) des Gehäuses (2) geführt werden, und auf der Ebene ihrer Hinterkante (100) von der Rückwand (20) des Gehäuses.

3. Vorrichtung gemäß Anspruch 2, dadurch gekennzeichnet, daß die Tragplatte (11) derart bemessen ist, daß sie für das Gehäuse (2) als Deckel dient, wenn sich die Vorrichtung im verbundenen Zustand befindet.

4. Vorrichtung gemäß einem der Ansprüche 1 bis 3, dadurch gekennzeichnet, daß die Bereiche (50) in Form von Nocken eine Anflachung (500) mit einer konvex gebogenen Eingangskante (501) aufweisen.

5. Vorrichtung gemäß einem der Ansprüche 1 bis 4, dadurch gekennzeichnet, daß die Profilkante der Aussparung (101) zwei nach vorne divergierende schräge Bereiche (104, 106) aufweist.

6. Vorrichtung gemäß Anspruch 5, dadurch gekennzeichnet, daß der Winkel, welchen die schrägen Bereiche (104, 106) zwischen sich bilden, in der Größenordnung von 90° liegt.

7. Vorrichtung gemäß Anspruch 6, dadurch gekennzeichnet, daß der untere schräge Bereich (104) mit einem Abstand (L) von der Tragplatte (11) angeordnet ist, welcher größer als die Länge (1) des sich unter der Tragplatte erstreckenden Verbindungsorgans (3) ist.

8. Vorrichtung gemäß einem der Ansprüche 1 bis 7, dadurch gekennzeichnet, daß sie Anschläge (70) und/oder Indizierungsvorrichtungen (9, 51a, 51b) für die Welle in ihren extremen Schwenkpositionen aufweist.

9. Vorrichtung gemäß einem der Ansprüche 1 bis 8, dadurch gekennzeichnet, daß das oder die Verbindungsorgan(e), welche(s) von der Tragplatte getragen wird (werden), von den Seitenplättchen (10) eingerahmt ist (sind) und daher vor Stößen geschützt ist (sind).

10. Vorrichtung gemäß einem der Ansprüche 1 bis 9, dadurch gekennzeichnet, daß das Gehäuse (2) mit einem durch eine Feder (80) in dem Sinn seiner Schließung festgezogenen Deckel (8) versehen und mit einem nach außen umgebogenen Rand (81) in Form einer Augenblende ausgestattet ist, welcher seine Öffnung erleichtert.

## Claims

1. A hydraulic connection device for hydraulically connecting together at least one pair of complementary connection members suitable for being interfitted axially, namely a male member (3) and a female member (4), said device comprising:
an upwardly open rectangular housing (2) whose bottom (24) carries one (4) of said members;
a plate (11) carrying the other member (3) and provided with a pair of side prongs (10) situated on either side of said other member (3), and extending downwards perpendicularly to the plane of the plate, each prong (10) being provided with a recess (101) having a forwardly-facing shaped edge (104-105-106); and
a control shaft (5) mounted to rotate about its own axis (XX') inside the housing (2) and having two cam-forming portions (50), each of which is suitable for cooperating with a shaped edge (104-105-106) of the associated prong (10) so as to cause the prongs (10) to penetrate into and to be locked inside the housing (2) on rotating the shaft (5), thereby interfitting the connection members (3, 4).

2. A device according to claim 1, characterized by the fact that the back edge (100) of each of said prongs (10) is rectilinear, the dimensioning and the positioning of the prongs (10) being such that their outside faces are guided by the side walls (22) of the housing (2), and their back edges (100) are guided by the back wall (20) of the housing.

3. A device according to claim 2, characterized by the fact that the plate (11) is dimensioned such that it serves as a lid for the housing (2) when the device is in the connected state.

4. A device according to any one of claims 1 to 3, characterized by the fact that each of the cam-forming portions (50) comprises a flat (500) having a convex arcuate inlet edge (501).

5. A device according to any one of claims 1 to 5, characterized by the fact that the shaped edge of the recess (101) has two forwardly-sloping portions (104, 106).

6. A device according to claim 5, characterized by the fact that the angle formed by the sloping portions (104, 106) is about 90°.

7. A device according to claim 6, characterized by the fact that the bottom sloping portion (104) is situated at a distance (L) from the plate (11) that is greater than the length (1) of the connector member (3) extending under the plate.

8. A device according to any one of claims 1 to 7, characterized by the fact that it includes abutments (70) and/or indexing means (9, 5la, 51b) for indexing the shaft in its end-of-rotation positions.

9. A device according to any one of claims 1 to 8, characterized by the fact that the connection member(s) (3) carried by the plate is/are flanked by said side prongs (10), and is/are thereby protected from impact.

10. A device according to any one of claims 1 to 9, characterized by the fact that the housing (2) is provided with a lid (8) urged by a spring (80) in the closing direction, and provided with a lip (81) sloping upwards like the peak of a cap for facilitating opening of the lid.
